# FASCICULE DE BREVET EUROPEEN

(11) **EP 1 840 328 B1**
(45) Date de publication et mention de la délivrance du brevet: **04.03.2009**
(21) Numéro de dépôt: 07075215.9
(22) Date de dépôt: 20.03.2007
(51) Int. Cl.: F01D 5/14, F01D 9/02

(54) **Secteur de redresseurs, étage de compression, compresseur et turbomachine comportant un tel secteur**
Gleichrichtersektor, Verdichtungsstufe, Verdichter und Strömungsmaschine, die einen solchen Sektor umfasst
Synchronising ring quadrant, compression stage, compressor and turbomachine comprising such a ring

(30) Priorité: 30.03.2006 FR 0602741
(43) Date de publication de la demande: 03.10.2007
(73) Titulaire: SNECMA, 75015 Paris (FR)
(72) Inventeur: Aynes, Claire, 77240 Cesson (FR); Boutteville, Evelyne, 94430 Chennevieres sur Marne (FR); Niclot, Thierry, 91600 Savigny sur Orge (FR)

(56) Documents cités:
- EP-A- 1 555 390
- WO-A-20/05116404
- DE-B- 1 200 070
- DE-C1- 19 941 133
- US-A- 2 110 679
- US-A- 5 474 419

## Description

L'invention se rapporte au domaine des turbomachines, notamment des turboréacteurs, et concerne des aubes de redresseur disposées au sein d'un compresseur.

Elle concerne plus précisément un nouvel aménagement d'une forme géométrique de l'aube afin de diminuer localement le niveau de contrainte.

Dans la suite de la description, les termes "amont" ou "aval" seront utilisés pour désigner les positions des éléments de structure les uns par rapport aux autres en direction axiale, en prenant pour référence le sens d'écoulement des gaz. De même, les termes "interne" ou "radialement interne" et "externe" ou "radialement externe" seront utilisés pour désigner les positions des éléments de structure les uns par rapport aux autres en direction radiale, en prenant pour référence l'axe de rotation de la turbomachine.

Une turbomachine comprend un ou plusieurs compresseur(s) délivrant de l'air sous pression à une chambre de combustion où l'air est mélangé à du carburant et allumé afin de générer des gaz de combustion chauds. Ces gaz s'écoulent vers l'aval de la chambre vers une ou plusieurs turbine(s) qui transforme(nt) l'énergie ainsi reçue afin d'entraîner en rotation le ou les compresseur(s) et ainsi fournir le travail nécessaire, par exemple, à la motorisation d'un avion.

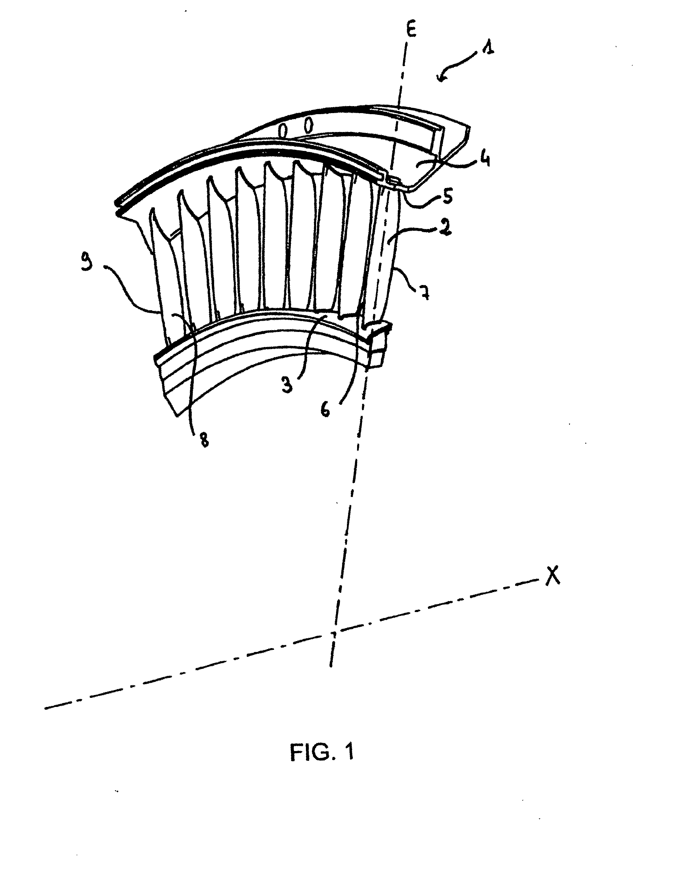

Un compresseur, par exemple un compresseur haute pression, est constitué d'un ou plusieurs étages de compression comprenant chacun une grille d'aubes fixes, suivie d'une roue mobile munie d'aubes mobiles. La grille d'aubes fixes, encore appelée grille de redresseurs peut être composée d'un ensemble de secteurs angulaires de redresseurs, dont un exemple est illustré à la figure 1, chaque secteur 1 comportant une pluralité d'aubes fixes 2, reliées par leur extrémité interne à une virole intérieure 3, et par leur extrémité externe à une virole extérieure 4. Le rôle des secteurs de redresseurs est de redresser le flux d'air arrivant de l'amont du moteur afin que ce flux arrive en amont de la roue mobile avec l'angle adéquat.

Les aubes 2 sont définies par deux flancs appelés respectivement intrados 8 et extrados 9 et formant un profil aérodynamique avec un bord d'attaque et un bord de fuite. Le bord d'attaque 6, ou BA, est formé par le raccordement amont entre l'intrados et l'extrados. Le bord de fuite 7, ou BF, est formé par le raccordement aval entre l'intrados et l'extrados. Ce profil aérodynamique est très important car il permet à l'aube de redresser de la façon voulue le flux d'air arrivant de l'amont de la turbomachine. Ce profil est défini par calcul et représenté sous forme de coupes radiales, effectuées selon l'axe d'empilement de l'aube, noté E sur la figure, à des hauteurs différentes par rapport à l'axe moteur. L'aube formée par ces différentes coupes radiales est ensuite intégrée entre les viroles intérieure et extérieure. Le raccordement entre l'aube et les viroles peut être réalisé de différentes façons. L'assemblage de l'aube et des viroles peut être ensuite réalisé par brasage.

Pour certains profils aérodynamiques, le rayon de courbure du BF est tellement petit par exemple de l'ordre du dixième de millimètre, que cela entraîne, pendant le fonctionnement du moteur, une augmentation de la contrainte statique dans la brasure réalisée entre l'aube et la virole extérieure, côté intrados, vers le BF. Le niveau de contrainte ainsi atteint peut se révéler rédhibitoire et être à l'origine de fissures apparaissant dans la brasure.

Lorsque ce type de fissures apparaît, il est connu de réaliser un aménagement de la géométrie de l'aube dans le but de diminuer le niveau de contrainte dans la zone fissurée. Cet aménagement de type connu est réalisé par une augmentation de l'épaisseur de l'aube sur l'ensemble des coupes radiales et pour tout ou partie de la hauteur h de l'aube. Ce type d'aménagement modifie donc le profil aérodynamique de l'aube ce qui implique qu'un nouveau profil doit être calculé et la tenue mécanique de la nouvelle aube, notamment le niveau de contrainte atteint dans la zone fissurée, doit être vérifiée. Plusieurs itérations entre le dimensionnement aérodynamique et le dimensionnement mécanique sont souvent nécessaires afin d'obtenir le profil satisfaisant à la fois d'un point de vue aérodynamique et d'un point de vue mécanique. Ce type de modification est lourd à mettre en oeuvre, long et coûteux. De plus, il implique un changement complet de l'aube et impacte de façon lourde sa fabrication.

Le document DE 199 411 33 décrit un secteur de redresseur de turbomachine de l'art anterieur.

L'invention permet de résoudre ces problèmes en proposant un nouveau type de secteur de redresseurs pour lequel un aménagement local de la géométrie des aubes a été réalisé. Cet aménagement permet de diminuer le niveau de contrainte dans la brasure liant l'aube à sa virole extérieure sans nécessiter qu'un nouveau dimensionnement aérodynamique soit effectué.

Ainsi, cet aménagement local permet de garantir la tenue mécanique du secteur de redresseurs, sans impacter le profil aérodynamique des aubes. Les itérations entre dimensionnement aérodynamique et dimensionnement mécanique ne sont donc plus nécessaires, ce qui permet un gain de temps, donc une réponse au besoin du client plus rapide, ainsi qu'une diminution de coût à la fois au niveau des études nécessaires et au niveau de la fabrication. En effet, dans le cas d'aubes forgées par exemple, seul un usinage local du moule existant sera nécessaire. De plus, ce nouveau type de redresseur est parfaitement interchangeable avec un ancien redresseur sans impacter les interfaces entre les pièces environnant le redresseur.

Plus particulièrement, l'invention concerne un secteur de redresseurs de turbomachine comportant au moins une aube de redresseur, chaque aube de redresseur étant reliée à une virole intérieure et à une virole extérieure et comportant une partie radialement interne de hauteur h4, une partie radialement externe de hauteur h1, un côté intrados, un côté extrados, un bord d'attaque, un bord de fuite, la partie radialement externe, appelée tête, se décomposant en une partie intermédiaire de hauteur h3 et une partie de liaison de hauteur h2 se raccordant entre elles, la partie intermédiaire étant disposée entre la partie de liaison et la partie radialement interne, la partie radialement interne de chaque aube comportant une première zone reliée à la partie radialement externe par une zone de transition, chaque aube étant reliée à la virole extérieure uniquement par sa partie de liaison, sa partie intermédiaire étant disposée radialement à l'intérieur de la virole extérieure, le bord de fuite ayant un rayon de courbure, raccordant l'intrados à l'extrados, qui augmente progressivement dans la zone de transition de l'aube, le rayon de courbure atteignant un maximum au niveau du raccordement entre la zone de transition et la partie intermédiaire puis restant constant dans la partie de liaison.

Selon un mode de réalisation de l'invention, la valeur du rayon de courbure du bord de fuite est constante dans la dans la première zone de la partie radialement interne de chaque aube.

Préférentiellement, la valeur du rayon de courbure du bord de fuite augmente linéairement dans la zone transition de chaque aube.

De façon avantageuse, l'épaisseur de la pale augmente progressivement dans la zone de transition de chaque aube, du côté intrados, vers le bord de fuite.

Selon un mode possible de réalisation, la valeur du rayon de courbure du bord de fuite de la zone de transition de chaque aube augmente jusqu'à atteindre le triple de la valeur du rayon de courbure du bord de fuite (7) de la première zone de la partie radialement interne de l'aube.

Avantageusement, la zone de transition (2d) et la partie intermédiaire (2c) de chaque aube représentent entre 0,5 et 2,5 % de la hauteur totale de l'aube et l'augmentation progressive de l'épaisseur de l'aube peut s'effectuer sur un tiers de sa longueur de corde.

L'invention concerne par ailleurs un étage de compression, un compresseur, ainsi qu'une turbomachine munis d'au moins un tel secteur de redresseurs.

L'invention sera mieux comprise et d'autres avantages de celle-ci apparaîtront plus clairement à la lumière de la description qui va suivre d'un mode préféré de réalisation, donnée à titre d'exemple non limitatif et faite en référence aux dessins annexés, dans lesquels :
- la figure 1 est une vue en perspective d'un secteur de redresseur, vu de l'amont, selon l'art antérieur ;
- la figure 2 est une vue schématique en coupe d'une turbomachine et plus précisément d'un turboréacteur d'avion;
- la figure 3 est une vue schématique en coupe d'une partie d'un secteur de redresseur;
- la figure 4 est une vue en coupe d'un secteur de redresseur, selon un plan comprenant l'axe X de rotation de la turbomachine, selon l'invention ;
- la figure 5 est une vue de détail d'un redresseur selon l'invention, vu de l'intrados ;
- la figure 6 est une vue en coupe, selon l'axe A-A, d'une aube selon l'invention.

La figure 1, déjà décrite, montre, vu de l'amont, un secteur de redresseurs 1 comportant une pluralité d'aubes 2.

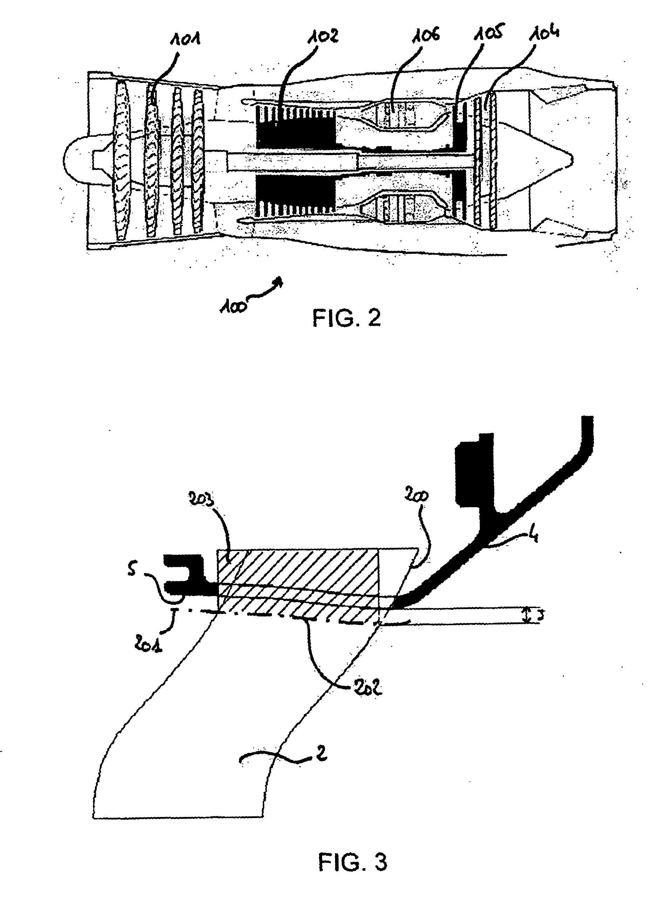

La figure 2 montre en coupe une vue d'ensemble d'une turbomachine 100, par exemple un turboréacteur d'avion, comprenant un compresseur basse pression 101, un compresseur haute pression 102, une turbine basse pression 104, une turbine haute pression 105 et une chambre de combustion 106.

La figure 3 montre, vue en coupe, un secteur de redresseur. Plus particulièrement, cette figure illustre un exemple de raccordement entre le profil aérodynamique 200 des aubes 2 et la virole extérieure 4. Dans cet exemple, le raccordement entre l'aube 2 et la virole extérieure 4 est obtenu de la façon suivante :

Le profil aérodynamique 200 se prolonge radialement au-delà de la virole extérieure. Afin de tenir compte des jeux cumulés de montage, le profil aérodynamique 200 est tronqué selon une surface 201, parallèle à la face interne 5 de la virole extérieure 4, la surface 201 et la face interne 5 étant séparées par une distance J égale à la valeur du cumul des jeux de montage. Une fois le profil aérodynamique 200 tronqué, la surface de coupure 202 ainsi obtenue est projetée radialement de façon à obtenir un cylindre 203, se prolongeant légèrement au-dessus de la virole extérieure 4. Ainsi, l'extrémité de l'aube située entre la surface de coupure 202 et la face interne 5 de la virole extérieure 4, est un cylindre dont les génératrices sont parallèles à l'axe d'empilement E de l'aube. Ce type de raccordement permet de faciliter le perçage d'ajours dans la virole extérieure, dans lesquels viennent se positionner les aubes.

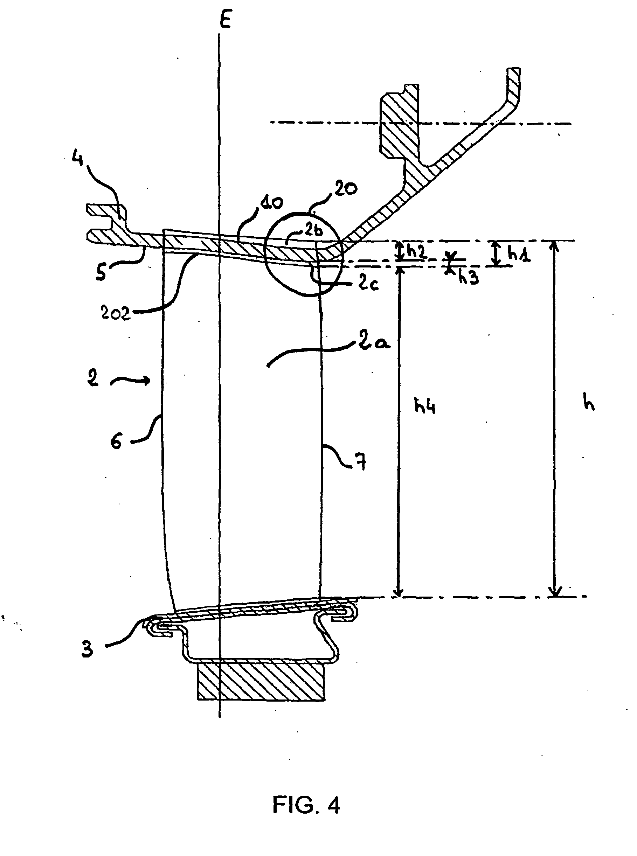

La figure 4 montre un secteur de redresseur, vu en coupe selon un plan comprenant l'axe X de rotation de la turbomachine, selon l'invention.

L'aube 2, de hauteur totale h, est composée d'une partie radialement externe 10 de hauteur h1 et d'une partie radialement interne 2a de hauteur h4. La partie radialement externe 10, appelée aussi tête de l'aube, se décompose en une partie de liaison 2b de hauteur h2 et une partie intermédiaire 2c de hauteur h3, avec h1=h2+h3.

L'aube 2 est encastrée radialement dans la virole extérieure 4 par l'intermédiaire de sa partie radialement externe 10, et plus précisément grâce à sa partie de liaison 2b. Dans l'exemple illustré ici, le raccordement entre l'aube 2 et la virole extérieure 4 est réalisé selon le procédé décrit précédemment. Ainsi, la partie radialement externe 10 est un cylindre dont les génératrices sont parallèles à l'axe d'empilement E de l'aube 2. La surface de coupure 202 correspond à la limite entre les parties radialement interne 2a et externe 10 de l'aube.

La partie radialement interne 2a de hauteur h4 s'étend entre la virole interne 3 et la surface de coupure 202. Sa forme est déterminée par calcul comme expliqué plus haut.

L'aube 2 et la virole extérieure 4 sont assemblées par brasage, la brasure étant réalisée entre la virole extérieure 4 et la partie de liaison 2b de hauteur h3 de l'aube. Lorsque le rayon de courbure du bord de fuite 7 est très petit, par exemple de l'ordre de 0,2 mm, une surcontrainte locale peut apparaître dans la brasure côté intrados, vers le BF, et être à l'origine de fissures. La zone où se situe cette éventuelle surcontrainte correspond au repère 20. C'est dans cette zone qu'un aménagement de la forme de l'aube est réalisé.

La hauteur h1 de la partie radialement externe 10 représente entre 5 % et 10 %, préférentiellement 7 %, de la hauteur totale h de l'aube 2 ; la hauteur h2 de la partie de liaison 2b représente entre 0,5 % et 15 %, préférentiellement 5,8 %, de la hauteur totale h ; et la hauteur h3 de la partie intermédiaire 2c entre 0 % et 5 %, préférentiellement 1,3 %, de la hauteur totale h.

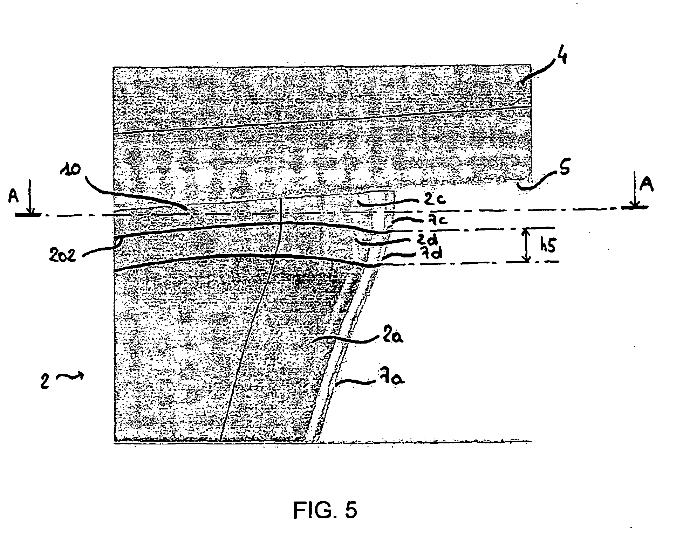

La figure 5 montre une vue de détail côté intrados, de la zone 20 d'une aube 2 munie d'un aménagement de forme conforme à l'invention.

Selon l'invention, la partie radialement interne 2a se décompose en deux zones, une première zone s'étendant radialement à partir de la virole extérieure, et une zone de transition 2d de hauteur h5, reliant la première zone à la partie intermédiaire 2c. La hauteur de la première zone est donc égale à h4-h5.

Dans la première zone de la partie radialement interne 2a de l'aube 2, le rayon de courbure du BF 7a, raccordant l'intrados 8 à l'extrados 9, est quasiment constant sur toute la hauteur h4.

Dans la zone de transition 2d, le rayon de courbure du BF 7d est évolutif. Il augmente progressivement en partant d'une valeur identique au rayon 7a, jusqu'à une valeur pouvant être égale au triple de la valeur du rayon 7a. Ce maximum est obtenu au niveau de surface de coupure 202 et correspond à un maximum au-delà duquel l'effet sur le niveau et la localisation de la surcontrainte n'est plus significatif. Préférentiellement, cette augmentation du rayon de courbure est linéaire.

Dans la partie intermédiaire 2c de l'aube 2, c'est à dire dans la partie située entre la surface de coupure 202 et la face interne 5 de la virole extérieure 4, le rayon de courbure du BF 7c est quasiment constant et égal au rayon de courbure 7d atteint au niveau de la surface de coupure 202.

Cet aménagement local du rayon est donc effectué sur une hauteur correspondant à h5+h3, avec h5 compris entre 0,5 % et 2,5 %, préférentiellement 2,2 %, de la hauteur totale de l'aube h. Ainsi, l'augmentation de rayon de courbure au BF n'a pas d'effet sur l'aérodynamique de l'aube.

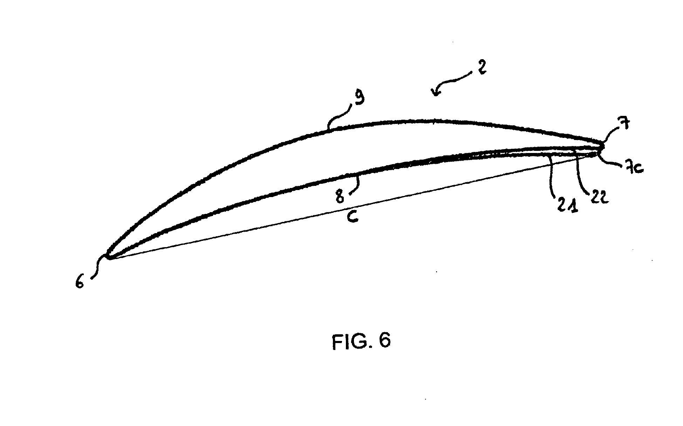

La figure 6 montre une vue en coupe, selon l'axe A-A, de la tête 10 d'une aube selon l'invention. Sont représentées, de façon superposées, une coupe correspondant à une aube sans aménagement de forme 22 et une coupe correspondant à une aube selon l'invention 21. Au niveau de la tête 10 de l'aube, et plus précisément au niveau de sa partie intermédiaire 2c, la coupe sans aménagement de forme 22 possède un rayon de courbure au BF 7 qui est identique sur toute la hauteur h de l'aube et dont la valeur est petite, à savoir de l'ordre de 0,1 à 0,3 mm. La coupe selon l'invention 21, c'est à dire correspondant à une aube avec aménagement de forme au BF intrados, présente un rayon de courbure au BF 7c augmenté par rapport à la coupe initiale 22.

De plus, l'augmentation du rayon de courbure au BF s'accompagne d'une augmentation de l'épaisseur de l'aube. Cette augmentation peut être réalisée sur toute la longueur de corde C de l'aube, mais généralement, seule la partie aval de la coupe 21 a une épaisseur augmentée. La longueur de corde C est la longueur de la ligne joignant le bord d'attaque et le bord de fuite de l'aube, pour une coupe donnée. Préférentiellement, la partie ayant son épaisseur augmentée représente au maximum un tiers de la longueur de corde pour une coupe considérée. L'augmentation d'épaisseur de la coupe est progressive de façon à ce qu'aucun accident de forme ou protubérance ne perturbe l'écoulement de l'air le long de l'intrados.

Enfin, dans la partie de liaison 2b, le rayon de courbure au BF est identique, sur toute la hauteur h2, au rayon de courbure de la partie intermédiaire 2c.

L'impact de ces aménagements géométriques, à savoir l'augmentation du rayon de courbure du BF et l'augmentation de l'épaisseur de l'aube, est purement mécanique car ces aménagements sont très localisés en terme de hauteur de l'aube et de longueur de corde touchées. De plus, l'épaississement ne se fait que sur l'intrados de l'aube. Ainsi, le dimensionnement aérodynamique de l'aube n'est pas remis en cause. De même, l'environnement direct de l'aube n'est pas modifié et la fabrication n'est pas impactée lourdement. En effet, par exemple dans le cas où le procédé de fonderie est utilisé, les moules, dans lesquels est coulé le métal en fusion et qui reproduisent la forme de l'aube, ne doivent pas être changés totalement. Seule une légère retouche des moules existants, c'est à dire de moules utilisés pour fabriqués des aubes sans aménagement de forme, doit être effectuée de façon très localisée.

Malgré le fait que ces modifications semblent légères, leur effet sur la tenue mécanique du secteur de redresseur est important. Par exemple, dans le cas d'un secteur de redresseur dont les caractéristiques des aubes sont les suivantes :
- hauteur de l'aube : 67mm,
- rayon au BF : 0,2 mm,
- corde en sommet de pale : 34,12 mm,
après augmentation du rayon du BF de 100% au niveau du raccordement entre l'aube et la surface interne de la virole extérieure, augmentation réalisée de façon linéaire sur 1,5 mm de hauteur de l'aube puis conservation du rayon augmenté sur 0,8 mm de hauteur, et après augmentation de l'épaisseur de l'aube, dans la même zone, sur un tiers de la longueur de corde pour chaque coupe considérée, une diminution de l'ordre de 50% de la contrainte maximale dans la brasure a été constatée, ainsi qu'un déplacement hors de la brasure de l'endroit d'application de la contrainte maximale vue dans la zone intrados BF.

## Revendications

1. Secteur de redresseurs de turbomachine comportant au moins une aube de redresseur (2), chaque aube de redresseur étant reliée à une virole intérieure (3) et à une virole extérieure (4) et comportant une partie radialement interne (2a) de hauteur h4, une partie radialement externe (10) de hauteur h1, un côté intrados (8), un côté extrados (9), un bord d'attaque (6), un bord de fuite (7), la partie radialement externe (10), appelée tête, se décomposant en une partie intermédiaire (2c) de hauteur h3 et une partie de liaison (2b) de hauteur h2 se raccordant entre elles, la partie intermédiaire (2c) étant disposée entre la partie de liaison (2b) et la partie radialement interne (2a),
**caractérisée en ce que** la partie radialement interne (2a) de chaque aube (2) comporte une première zone reliée à la partie radialement externe (10) par une zone de transition (2d), **en ce que** chaque aube (2) est reliée à la virole extérieure (4) uniquement par sa partie de liaison (2b), sa partie intermédiaire (2c) étant disposée radialement à l'intérieur de la virole extérieure (4), et **en ce que** le bord de fuite (7) a un rayon de courbure, raccordant l'intrados (8) à l'extrados (9), qui augmente progressivement dans la zone de transition (2d) de l'aube, le rayon de courbure atteignant un maximum au niveau du raccordement entre la zone de transition (2d) et la partie intermédiaire (2c) puis restant constant dans la partie intermédiaire (2c) et la partie de liaison (2b).

2. Secteur de redresseurs selon la revendication 1,
**caractérisée en ce que** la valeur du rayon de courbure du bord de fuite (7) est constante dans la première zone de la partie radialement interne (2a) de chaque aube.

3. Secteur de redresseurs selon l'une quelconque des revendications 1 ou 2,
**caractérisée en ce que** la valeur du rayon de courbure du bord de fuite (7) augmente linéairement dans la zone transition (2d) de chaque aube.

4. Secteur de redresseurs selon l'une quelconque des revendications 1 à 3,
**caractérisée en ce que** chaque aube a une épaisseur qui augmente progressivement dans sa zone de transition (2d), du côté intrados, vers le bord de fuite (7).

5. Secteur de redresseurs selon l'une quelconque des revendications 1 à 4,
**caractérisée en ce que** la valeur du rayon de courbure du bord de fuite (7) de la zone de transition (2d) de chaque aube augmente jusqu'à atteindre le triple de la valeur du rayon de courbure du bord de fuite (7) de la première zone de la partie radialement interne de l'aube.

6. Secteur de redresseurs selon l'une quelconque des revendications 1 à 5,
**caractérisée en ce que** la zone de transition (2d) et la partie intermédiaire (2c) de chaque aube représentent entre 0,5 et 2,5 % de la hauteur totale de l'aube.

7. Secteur de redresseurs selon l'une quelconque des revendications 4 à 6,
**caractérisée en ce que** chaque aube ayant une longueur de corde C, l'augmentation progressive de l'épaisseur de l'aube dans la partie intermédiaire (2c) s'effectue sur un tiers de la longueur de la corde.

8. Etage de compression comprenant une grille de secteurs de redresseurs et une roue mobile munie d'aubes mobiles, la grille de secteurs de redresseurs comprenant au moins un secteur de redresseurs selon l'une des revendications précédentes.

9. Compresseur comprenant au moins un étage de compression selon la revendication 8.

10. Turbomachine comprenant au moins un compresseur selon la revendication précédente.

## Claims

1. Turbomachine stator section comprising at least one stator vane (2), each stator vane being connected to an inner shroud (3) and to an outer shroud (4) and comprising a radially internal part (2a) of height h4, a radially external part (10) of height h1, a pressure face side (8), a suction face side (9), a leading edge (6), a trailing edge (7), the radially external part (10), known as the tip, being made up of an intermediate part (2c) of height h3 and a connecting part (2b) of height h2 which meet, the intermediate part (2c) being positioned between the connecting part (2b) and the radially internal part (2a),
**characterized in that** the radially internal part (2a) of each vane (2) comprises a first zone connected to the radially external part (10) by a transition zone (2d), **in that** each vane (2) is connected to the outer shroud (4) only by its connecting part (2b), its intermediate part (2c) being positioned radially inside the outer shroud (4) and **in that** the trailing edge (7) has a radius of curvature, connecting the pressure face (8) to the suction face (9), which increases progressively in the transition zone (2d) of the vane, the radius of curvature reaching a maximum where the transition zone (2d) and the intermediate part (2c) meet then remaining constant in the intermediate part (2c) and the connecting part (2b).

2. Stator section according to Claim 1,
**characterized in that** the radius of curvature of the trailing edge (7) is constant in the first zone of the radially internal part (2a) of each vane.

3. Stator section according to either one of Claims 1 and 2,
**characterized in that** the radius of curvature of the trailing edge (7) increases linearly in the transition zone (2d) of each vane.

4. Stator section according to any one of Claims 1 to 3,
**characterized in that** each vane has a thickness that increases progressively in its transition zone (2d) on the pressure face side towards the trailing edge (7).

5. Stator section according to any one of Claims 1 to 4,
**characterized in that** the radius of curvature of the trailing edge (7) of the transition zone (2d) of each vane increases until it reaches three times the radius of curvature of the trailing edge (7) of the first zone of the radially internal part of the vane.

6. Stator section according to any one of Claims 1 to 5,
**characterized in that** the transition zone (2d) and the intermediate part (2c) of each vane represent between 0.5 and 2.5% of the total height of the vane.

7. Stator section according to any one of Claims 4 to 6,
**characterized in that,** if each vane has a chord length C, the progressive increase in the thickness of the vane in the intermediate part (2c) occurs over one third of the length of the chord.

8. Compression stage comprising a cascade of stator sections and a rotor disk equipped with rotor blades, the cascade of stator sections comprising at least one stator section according to one of the preceding claims.

9. Compressor comprising at least one compression stage according to Claim 8.

10. Turbomachine comprising at least one compressor according to the preceding claim.

## Patentansprüche

1. Leitapparat-Sektor einer Turbomaschine mit mindestens einer Leitschaufel (2), wobei jede Leitschaufel mit einem inneren Ring (3) und einem äußeren Ring (4) verbunden ist und einen radial inneren Teil (2a) mit der Höhe h4, einen radial äußeren Teil (10) mit der Höhe h1, eine Druckseite (8), eine Saugseite (9), eine Vorderkante (6) und eine Hinterkante (7) aufweist, wobei der radial äußere Teil (10), Schaufelkopf genannt, sich in einen Zwischenteil (2c) mit der Höhe h3 und einen Verbindungsteil (2b) mit der Höhe h2 unterteilt, die sich aneinander anschließen, wobei der Zwischenteil (2c) zwischen dem Verbindungsteil (2b) und dem radial inneren Teil (2a) angeordnet ist,
**dadurch gekennzeichnet,**
**dass** der radial innere Teil (2a) jeder Schaufel (2) eine erste Zone enthält, die mit dem radial äußeren Teil (10) durch eine Übergangszone (2d) verbunden ist, dass jede Schaufel (2) mit dem äußeren Ring (4) nur durch ihren Verbindungsteil (2b) verbunden ist, wobei ihr Zwischenteil (2c) radial innerhalb des äußeren Rings (4) angeordnet ist, und dass die Hinterkante (7) einen die Druckseite (8) mit der Saugseite (9) verbindenden Krümmungsradius hat, der in der Übergangszone (2d) der Schaufel fortschreitend zunimmt, wobei der Krümmungsradius im Bereich des Anschlusses zwischen der Übergangszone (2d) und dem Zwischenteil (2c) ein Maximum erreicht und dann in dem Zwischenteil (2c) und dem Verbindungsteil (2b) konstant bleibt.

2. Leitapparat-Sektor nach Anspruch 1,
**dadurch gekennzeichnet,**
**dass** der Wert des Krümmungsradius der Hinterkante (7) in der ersten Zone des radial inneren Teils (2a) jeder Schaufel konstant ist.

3. Leitapparat-Sektor nach einem der Ansprüche 1 oder 2,
**dadurch gekennzeichnet,**
**dass** der Wert des Krümmungsradius der Hinterkante (7) in der Übergangszone (2d) jeder Schaufel linear zunimmt.

4. Leitapparat-Sektor nach einem der Ansprüche 1 bis 3,
**dadurch gekennzeichnet,**
**dass** jede Schaufel eine Dicke hat, die in ihrer Übergangszone (2d) auf der Druckseite zur Hinterkante (7) hin fortschreitend zunimmt.

5. Leitapparat-Sektor nach einem der Ansprüche 1 bis 4,
**dadurch gekennzeichnet,**
**dass** der Wert des Krümmungsradius der Hinterkante (7) in der Übergangszone (2d) jeder Schaufel zunimmt, bis er das Dreifache des Werts des Krümmungsradius der Hinterkante (7) der ersten Zone des radial inneren Teils der Schaufel erreicht.

6. Leitapprat-Sektor nach einem der Ansprüche 1 bis 5,
**dadurch gekennzeichnet,**
**dass** die Übergangszone (2d) und der Zwischenteil (2c) jeder Schaufel zwischen 0,5 und 2,5 % der Gesamthöhe der Schaufel ausmachen.

7. Leitapparat-Sektor nach einem der Ansprüche 4 bis 6;
**dadurch gekennzeichnet,**
**dass,** indem jede Schaufel eine Länge der Spannweite C aufweist, die fortschreitende Zunahme der Dicke der Schaufel in dem Zwischenteil (2c) über ein Drittel der Länge der Spannweite erfolgt.

8. Verdichterstufe mit einem Gitter von Leitapparat-Sektoren und einem Laufrad mit bewegbaren Schaufeln, wobei das Gitter von Leitapparat-Sektoren mindestens einen Leitapparat-Sektor nach einem der vorherigen Ansprüche enthält.

9. Verdichter mit mindestens einer Verdichterstufe nach Anspruch 8.

10. Turbomaschine, die mindestens einen Verdichter nach dem vorherigen Anspruch aufweist.
